# EUROPÄISCHE PATENTANMELDUNG

(11) **EP 1 099 892 A1**
(43) Veröffentlichungstag der Anmeldung: **16.05.2001**
(21) Anmeldenummer: 00120050.0
(22) Anmeldetag: 15.09.2000
(51) Int. Cl.: F16J 15/34, F16J 15/12

(54) **Abdichtung zwischen zueinander koaxialen axialsymmetrischen Querschnitten von Bauteilen**

(30) Priorität: 09.11.1999 DE 19953749; 13.04.2000 DE 20006803 U
(71) Anmelder: Witzenmann GmbH Metallschlauch-Fabrik Pforzheim, 75175 Pforzheim (DE); Kühner GmbH & CIE, 71570 Oppenweiler (DE)
(72) Erfinder: Burkhardt, Dr. Carlo, 75331 Grunbach (DE); Seeger, Bernd, 75181 Pforzheim (DE); Kallfass, Dipl-Ing Bernd, 71554 Weissach im Tal (DE); Scheyhing, Dipl. Ing Ulrich, 71364 Winnenden (DE)
(74) Vertreter: Lemcke, Rupert, Dipl.-Ing.

(57) **Zusammenfassung**

Es wird eine Abdichtung zwischen zueinander koaxialen axialsymmetrischen Querschnitten von Bauteilen, insbesondere mit ihren Enden aufeinander zugerichteten Leitungselementen angegeben, wobei die Bauteile gemeinsam eine ringförmige Dichtkammer aus Metall (5,26) mit radial und axial voeinander beabstandeten Wandungen (6,7,8,9,27,28,29,30) bilden und wobei zur Abdichtung ein innerhalb der Dichtkammer (5,26) anliegender Dichtring (10,31) vorgesehen ist. Dabei besteht der Dichtring (10,31) aus einem Metallbalgabschnitt mit wenigstens zwei Wellenbergen (12,33) oder Wellentälern sowie einer deren einander gegenüberstehenden Flanken miteinander verbindenden Übergangswelle (11,32), wobei die Wellenberge bzw. Wellentäler mit einem inkompressiblen, flexiblen Feststoff (13,34) vollständig ausgefüllt sind, und die Wellen durch axiale Kompression und daraus resultierende axiale und radiale Verformung des Dichtringes (10,31) in dichtende Anlage zumindest an die ihnen jeweils zugeordneten, radial voneinander beabstandeten Wandungen der Dichtkammer (5,26) gebracht sind.

## Beschreibung

Die Erfindung betrifft eine Abdichtung zwischen zueinander koaxialen axialsymmetrischen Querschnitten von Bauteilen, insbesondere mit ihren Enden aufeinander zu gerichteten Leitungselementen, wobei die Bauteile gemeinsam eine ringförmige Dichtkammer aus Metall mit radial und axial voneinander beabstandeten Wandungen bilden, und wobei zur Abdichtung innerhalb der Dichtkammer ein an den Wandungen anliegender Dichtring vorgesehen ist.

Dichtringe zum Abdichten von Trennfugen zwischen zwei Bauteilen insbesondere Rohrleitungen sind den jeweiligen an sie zu stellenden physikalischen, chemischen und mechanischen Anforderungen angepaßt. Im Nieder- und Normaldruckbereich werden Trennfugen zwischen Rohrenden häufig mit Dichtungsringen aus Gummi oder Elastomeren abgedichtet. Wenn allerdings höhere Anforderungen hinsichtlich Temperatur oder Medienbeständigkeit sowie Dichtheit an die Abdichtung gestellt werden, scheiden diese Werkstoffe aus.

Beispielsweise bei Klimaanlagen müssen die Dichtringe über die genannten Eigenschaften hinaus sowohl kältemittelbeständig und kältemitteldicht als auch ölbeständig sein. Durch das verwandte Kältemittel und das verwandte Öl, dürfen sich die Abdichtungen also nicht auflösen, sie dürfen keine hohe Quellung aufweisen und nur möglichst wenig Extraktstoffe abgeben. Aus Gründen des Umweltschutzes besteht bei Klimaanlagen heute nun zunehmend die Tendenz, Kohlendioxid als Kältemittel einzusetzen. Da dies sowohl im flüssigen als auch im gasförmigen Zustand im Einsatz ist, besteht die Notwendigkeit, hohe Drücke von bis zu 200 Bar anzuwenden.

Werden unter diesen Bedingungen Gummi- bzw. Elastomerabdichtungen eingesetzt, so besteht vor allem das Problem, daß diese gegenüber Kohlendioxid nicht permeationsdicht sind und dadurch ihre Dichtheit nicht ausreichend ist. Da darüber hinaus die Temperatur des Kältemittels in den Kältemittelleitungen bis zu 200° C betragen kann, können die bekannten Gummi- bzw. Elastomerabdichtungen dort nur sehr eingeschränkt benutzt werden.

Aufgabe der vorliegenden Erfindung ist es daher, eine Abdichtung der eingangs genannten Art so auszubilden, daß sie die genannten Eigenschaften wie Permationsdichtheit gegen Gase, Temperaturbeständigkeit bis in hohe Temperaturregionen und Druckbeständigkeit sowie Lösungsmittelbeständigkeit insbesondere gegenüber Kältemittel in Form von Kohlendioxid aufweist.

Diese Aufgabe ist erfindungsgemäß dadurch gelöst, daß der Dichtring aus einem Metallbalgabschnitt mit wenigstens zwei Wellenbergen oder Wellentälern sowie einer deren einander gegenüberstehenden Flanken miteinander verbindenden Übergangswelle besteht, daß die Wellenberge bzw. Wellentäler mit einem inkompressiblen, flexiblen Feststoff vollständig ausgefüllt sind, und daß die Wellen durch die axiale Kompression und daraus resultierende axiale und radiale Verformung des Dichtringes in dichtende Anlage zumindest an die ihnen jeweils zugeordneten, radial voneinander beabstandeten Wandungen der Dichtkammer gebracht sind.

Bei der nachfolgenden Erläuterung der Vorteile der Erfindung wird vor allem auf die Abdichtung zwischen zwei Rohrenden Bezug genommen. Die erfindungsgemäße Abdichtung kann aber genauso gut an die Stelle des Packungsmaterial einer Stoffbuchse treten, die beispielsweise bei Ventilen die Betätigungsspindel gegenüber dem Gehäuse abdichtet.

Die erfindungsgemäßen Maßnahmen haben die Wirkung, daß durch die axiale Kompression des Dichtringes die von dem inkompressiblen, flexiblen Feststoff ausgefüllten Wellenberge oder - bei umgekehrtem Einbau des Dichtringes - Wellentäler axial verkleinert werden, wodurch der Feststoff radial ausweicht und die Wellenberge bzw. Wellentäler gegen die ihnen zugeordnete beispielsweise achsparallele Wandung der Dichtkammer preßt. Bei weiterer axialer Kompression entsteht eine zu der obigen Wirkung entgegengesetzt gerichtete Kraft, die die Übergangswelle dichtend gegen die ihr zugeordnete, achsparallele Wandung drückt. An den radialen Wandungen der Dichtkammer entsteht eine Abdichtung dadurch, daß die den Metallbalgabschnitt begrenzenden Wellenaußenflanken mit ihnen in dichtende Anlage gebracht werden.

Insgesamt zeichnet sich die Abdichtung zunächst dadurch aus, daß es sich um eine Metallabdichtung handelt, die insbesondere temperaturbeständig und permeationsdicht ist. Darüber hinaus ist die Dichtpressung, also die effektiv wirkende Dichtkraft, durch Anpassung der axialen Kompression einstellbar, wodurch die Dichtung verschiedenen Druckanforderungen im Hochdruckbereich gerecht wird. Weiter wird eine besonders hohe Dichtwirkung dadurch erzielt, daß zumindest an der den Wellenbergen oder Wellentälern zugeordneten beispielsweise achsparallelen Wandung eine mehrfache Anlage zwischen Dichtring und Dichtkammer gebildet wird.

In einer zweckmäßigen Weiterbildung der Erfindung kann der durch die gegenüberstehenden Flanken und die Übergangswelle begrenzte Raum ebenfalls mit dem inkompressiblen, flexiblen Feststoff vollständig ausgefüllt sein.

Vorteilhafterweise werden die Wellenberge bzw. Wellentäler durch die axiale Kompression des Dichtringes von einem nur teilausgeformten Zustand in einen endgültig ausgeformten Zustand gebracht. Hierbei sind in dem teilausgeformten Anfangszustand die Wellenberge bzw. Wellentäler abgeflacht und werden durch die Radialkraft des inkompressiblen Feststoffes soweit ausgeformt, daß sie sich in dichtender Anlage an der entsprechenden Wandung der Dichtungskammer befinden. Hierdurch wird eine räumliche Anpassungsfähigkeit des Dichtungsringes gewährleistet, der sich somit in gewissen Grenzen verschiedenen radialen Abmessungen der Dichtungskammer anpassen kann.

Als besonders vorteilhaft wird es dabei empfunden, wenn sowohl die Übergangswelle als auch die Wellenberge bzw. Wellentäler in ihrem endgültig ausgeformten Zustand im wesentlichen linienförmig an den ihnen jeweils zugeordneten Wandungen der Dichtkammer anliegen. Hierdurch wird im Vergleich zu einer flächigen Anlage eine bei gleicher Krafteinwirkung wesentlich erhöhte Druckpressung erreicht.

Der Abstand der die Übergangswelle begrenzenden Balgflanken sollte im übrigen geringer sein als der die Wellenberge bzw. Wellentäler begrenzenden Flanken. Dadurch wird gewährleistet, daß die axiale Kompression des Dichtringes im wesentlichen nicht auf einer Verringerung der Breite der Übergangswelle sondern der Wellenberge bzw. Wellentäler beruht. Somit wird die Breite des dem imkompressiblen, flexiblen Feststoff zur Verfügung stehenden Raumes so begrenzt, daß die daraus resultierende auf den Feststoff wirkende Radialkraft genügt, um die Wellenberge in ihren endgültig ausgeformten Zustand zu bringen und um eine ausreichende Dichtpressung zu garantieren.

Was die den Metallbalgabschnitt begrenzenden Außenflanken betrifft, so können diese so ausgebildet sein, daß sie im wesentlichen geradlinig radial auf die ihnen in Radialrichtung benachbarte Wandung der Dichtkammer zulaufen und an dieser enden. Dadurch gelingt es, daß die Außenflanken schon bei geringer axialer Kompression dicht an den ihnen zugeordneten Wandungen anliegen. Im Gegensatz dazu müßten bei auf die radialen Wandungen zulaufenden Außenflanken im Zuge der axialen Kompression weitere axial gerichtete Gegenkräfte überwunden werden, bis eine dichtende Anlage der Außenflanken erreicht werden kann.

Vorteilhafterweise kann der Metallbalgabschnitt aus einem temperatur- und korrosionsbeständigen Metall bestehen, so daß der Dichtring auch bei hohen Temperaturen und korrosionsfördernden Bedingungen, wie etwa bei Einsatz von aggressiven Medien, gegen die abgedichtet werden muß, seine anfängliche, optimale Dichtwirkung auch im Verlaufe einer längeren Betriebsdauer behält. Hierzu wird Edelstahl als besonders geeignet angesehen.

Was den Feststoff betrifft, so ist für diesen ein Elastomer vorteilhaft, der natürlich im Zuge einer erhöhten Temperatur- und Korrosionsbeanspruchung ebenfalls temperatur- und korrosionsbeständig sein muß.

Wird der Dichtring eingesetzt bei der Verbindung zweier einen Strömungsquerschnitt für ein Medium aufweisender Bauteile, insbesondere Rohrleitungen, kann die Dichtkammer gebildet sein durch eine endständige äußere, achsparallele Wandung des ersten Bauteils und eine von ihr radial beabstandete innere, ebenfalls achsparallele Wandung des zweiten Bauteils, sowie sich mit axialem Abstand von den jeweiligen freien Enden der achsparallelen Wandungen an diese anschließende, nach radial innen bzw. außen gerichtete Wandungen. Die Dichtkammer kann zweckmäßigerweise aber auch gebildet sein durch eine endständige äußere, von deren freiem Ende aus konisch verjüngend verlaufende erste Wandung des ersten Bauteils und durch eine innere, von ihr radial beabstandete und von deren freiem Ende aus konisch verbreiternd verlaufende, zur ersten im wesentlichen parallele zweite Wandung des zweiten Bauteils sowie durch sich mit axialem Abstand von den jeweiligen freien Enden der konisch verlaufenden Wandungen an diese anschließende nach radial innen bzw. außen gerichtete Wandungen. Diese Ausbildung der Dichtkammer verbessert noch einmal die Dichtwirkung im Vergleich zu der durch die achsparallelen Wandungen gebildeten Dichtkammer.

Die nach radial außen gerichtete Wandung des zweiten Bauteils kann dabei die Kompression des Dichtrings bewirken, indem sie in axialer Richtung gegen den Dichtring gepreßt wird. Dabei kann es vorteilhaft sein, daß sie radial kleiner ist als der Innendurchmesser der achsparallelen Wandung des ersten Bauteils, damit sie - sollte die notwendige Dichtpressung noch nicht erreicht sein - nicht gegen diese Wandung stoßen kann.

Es kann aber auch genauso gut vorteilhaft sein, die axiale Kompressionsfähigkeit des Dichtringes und die Maße der Dichtkammer so aufeinander abzustimmen, daß bei der erwünschten Dichtpressung des Dichtringes die nach radial außen gerichtete Wandung des zweiten Bauteils von dem freien Ende der achsparallelen oder konisch verlaufenden Wandung des ersten Bauteils axial beabstandet ist. Somit bleibt immer noch die Möglichkeit, die axiale Kompression und damit die Dichtpressung zu erhöhen, wenn während des Einsatzes festgestellt wird, daß die Dichtpressung nicht ausreichend ist.

Bei dieser Ausführungsform taucht im übrigen zweckmäßig die innere achsparallele oder konisch verlaufende Wandung des zweiten Bauteils endständig in einen seinem Außendurchmesser entsprechenden Innenquerschnitt des ersten Bauteils ein, wobei sich dieser Innenquerschnitt axial an die Dichtkammer anschließt. Es kann sich also insbesondere um Muffenverbindungen von Rohren oder sonstigen Bauteilen handeln, bei denen die oben beschriebene Wandungsform des ersten Bauteils beispielsweise als Bohrung in das Bauteil eingelassen ist. Zur Verbindung der beiden Bauteile kann dann das zweite Bauteil die oben beschriebene innere, achsparallele Wandungsform als Vorsprung aufweisen.

Was die Übergangswelle des Metallbalgabschnittes betrifft, so ist es vorteilhaft, daß diese an der achsparallelen oder konisch verlaufenden Wandung des eintauchenden Bauteils anliegt, der Dichtring also im übrigen nach radial außen gerichtete Wellenberge aufweist. Hierdurch wird gewährleistet, daß der Feststoff vollständig umschlossen ist. Bei Einbau eines Dichtringes mit nach radial innen gerichteten Wellentälern kann es dagegen vorkommen, daß der Feststoff an der äußeren, achsparallelen Wandung austritt.

Weiter können die Bauteile durch in Richtung der axialen Kompression des Dichtringes verlaufende Spannmittel, beispielsweise Spannschrauben miteinander verspannt sein. Hierdurch werden die Bauteile in ihrer gegenseitigen Lage fixiert und es wird gleichzeitig eine konstante Dichtpressung für den Dichtring aufrecht erhalten.

Weitere erfindungswesentliche Merkmale und Einzelheiten ergeben sich aus den nachfolgenden Zeichnungen und der Beschreibung einer Ausführungsform.

Im einzelnen zeigen:
- Fig. 1: einen Querschnitt einer Abdichtung zwischen zwei miteinander verbundenen Rohrenden vor einer Montage;
- Fig. 2: den Querschnitt der Abdichtung zwischen den beiden Rohrenden im montierten Zustand;
- Fig. 3: einen vergrößerten Ausschnitt der Abdichtung vor der Montage;
- Fig. 4: eine weitere erfindungsgemäße Ausführungsfrom vor einer Montage.

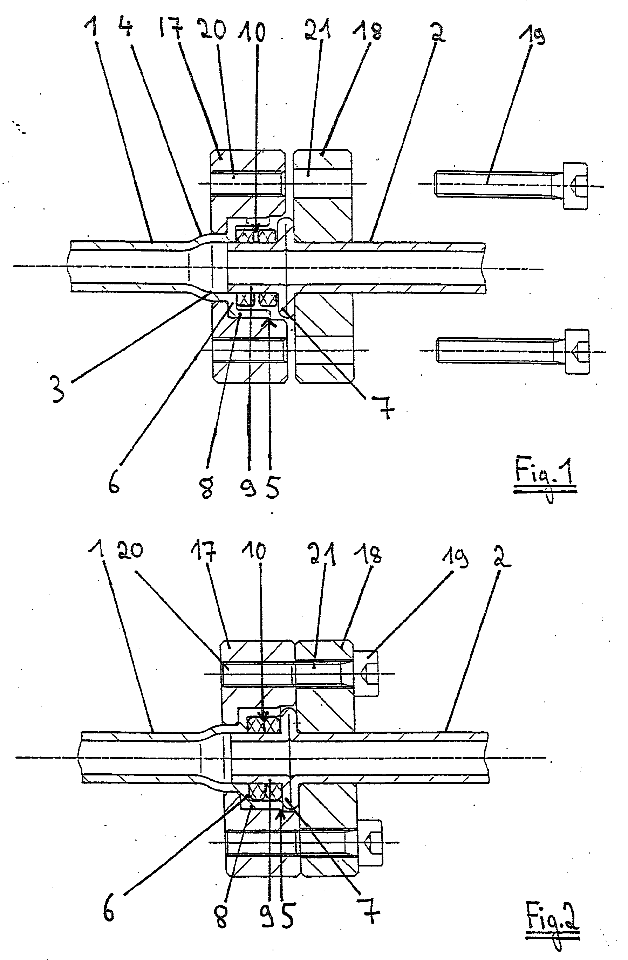

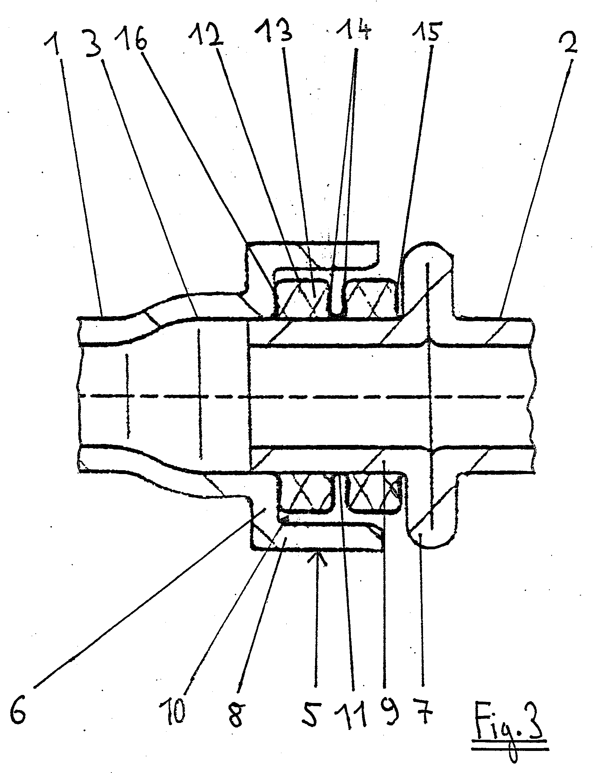

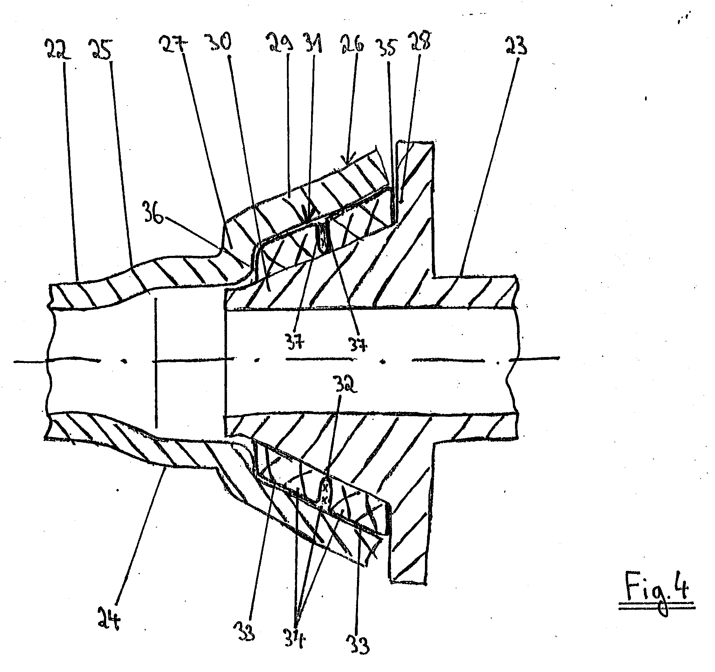

Figur 1 zeigt die Verbindung zweier Rohrenden 1, 2, wobei das zweite Rohr 2 in einen seinem Außendurchmesser entsprechenden Innenquerschnitt 3 des ersten Rohres 1 eintaucht. Der geeignete Innenquerschnitt 3 wird dadurch erreicht, daß das Rohrende 1 in dem Eintauchbereich des zweiten Rohres 2 eine nach radial außen gerichtete Krümmung 4 aufweist. Wie aus der Zeichnung hervorgeht, sind die beiden Rohrenden hinsichtlich ihrer axialsymmetrischen Querschnitte - in diesem Fall kreisförmigen Querschnitte - zueinander koaxial.

Die beiden Rohrenden 1, 2 bilden eine ringförmige Dichtkammer 5, die aus jeweils radialen Wandungen 6, 7 und äußeren bzw. inneren achsparallelen Wandungen 8, 9 des ersten bzw. zweiten Rohrendes gebildet ist. Dabei entspricht der Außendurchmesser der durch eine Sicke des Rohrendes 2 gebildeten radialen Wandung 7 in etwa dem Außendurchmesser der achsparallelen Wandung 8.

Innerhalb der Dichtkammer 5 ist ein Dichtring 10 angeordnet, der, wie besser aus Figur 3 ersichtlich ist, aus zwei durch eine Übergangswelle 11 verbundenen Wellenbergen 12 eines Metallbalgabschnittes besteht, wobei die Wellenberge 12 durch einen inkompressiblen und flexiblen Feststoff 13, insbesondere einem Elastomer, vollständig ausgefüllt sind. Was die Maße der Wellenberge im Verhältnis zu der Übergangswelle angeht, so ist der Abstand der die Übergangswelle begrenzenden Balgflanken 14 kleiner als der die Wellenberge begrenzenden Flanken 14, 15 bzw. 14, 16.

Der Dichtring 10 ist innerhalb der Dichtkammer 5 so angeordnet, daß die Übergangswelle 11 und der Feststoff 13 an der achsparallelen Wandung 9 des zweiten Bauteils 2 anliegen, so daß die Wellenberge 12 nach radial außen zeigen. Da sich die Wellenberge 12 in einem nur teilausgeformten Zustand befinden, das heißt an ihren radialen Außenseiten im wesentlichen achsparallel verlaufen, sind diese Außenseiten von der achsparallelen Wandung 8 radial beabstandet, was ein reibungsloses Eintauchen des zweiten Rohres 2 in das erste Rohr 1 bei der Montage ermöglicht. Des weiteren wird deutlich, daß die eine Außenflanke 15 des Dichtringes 10 von der ihr zugeordneten radialen Wandung 7 axial beabstandet ist, während die andere Außenflanke 16 an der ihr zugeordneten Radialwandung 6 anliegt. Weiterhin laufen die beiden Außenflanken 15, 16 geradlinig radial auf die achsparallele Wandung 9 zu und enden an dieser.

Es sei an dieser Stelle erwähnt, daß es zweckmäßig ist, den durch die Balgflanken 14 und die Übergangswelle 11 begrenzten Raum ebenfalls vollständig mit dem inkompressiblen und flexiblen Feststoff 13 auszufüllen.

Zur Verspannung der beiden Rohrenden 1, 2 sind deren radiale Wandungen 6, 7 hintergreifende Flansche 17, 18 und diese über Bohrungen 20, 21 durchgreifende Spannschrauben 19 vorgesehen.

Figur 2 zeigt nun die beiden Rohrenden 1, 2 im verspannten Zustand, der durch Eindrehen der Schrauben 19 in dafür vorgesehene Gewinde 20 des Flansches 17 bewirkt wurde, so daß die beiden Rohrenden 1, 2 axial aufeinander zu bewegt wurden. Dabei wurde die radiale Wandung 7 des zweiten Bauteils 2 gegen die ihr zugeordnete äußere Flanke 15 des Dichtringes 10 gepreßt, der dadurch axial komprimiert wurde. Infolge der Pressung verringerte sich die Breite der von dem Elastomer aufgefüllten Räume, so daß der Elastomer nach radial außen ausweichen mußte und die dabei in der Figur 1 nur teilausgeformten Wellenberge in ihren Endzustand ausformte.

In diesem Endzustand befinden sich die Wellenberge 12 und die Übergangswelle 11 in im wesentlichen linienförmig umlaufender Anlage an den ihnen jeweils zugeordneten achsparallelen Wandungen 8, 9. Ebenso befinden sich die Außenflanken 15, 16 des Dichtringes 10 in dichtender Anlage an den ihnen jeweils zugeordneten radialen Wandungen 7, 6.

Nicht so gut zu erkennen ist der auch in dem verspannten Zustand vorhandene axiale Abstand zwischen der achsparallelen Wandung 8 und der radialen Wandung 7, durch den, wie schon erwähnt, die Möglichkeit gegeben ist, die axiale Kompression und damit die Dichtpressung zu erhöhen, wenn während des Einsatzes festgestellt wird, daß die Dichtpressung nicht ausreicht.

Die im vorhergehenden dargestellte Ausführungsform bezog sich auf zwei miteinander verbundene Rohrenden, allerdings können anstelle der Rohrenden auch andere Bauteile vorgesehen werden, die eine solche Dichtkammer bilden. So wird eine derartige Dichtkammer z. B. bei Ventilen durch die aus dem Ventilgehäuse austretende Betätigungsspindel und der zu der Betätigungsspindel koaxialen Stopfbuchse gebildet.

Figur 4 zeigt schließlich ein weiteres Ausführungsbeispiel der vorliegenden Erfindung. Dabei ist die Verbindung zweier Rohrenden 22, 23 dargestellt, wobei das zweite Rohr 23 in einen seinem Außendurchmesser entsprechenden Innenquerschnitt 24 des ersten Rohres 22 eintaucht. Dazu weist das Rohrende 22 in dem Eintauchbereich des zweiten Rohres 23 eine nach radial außen gerichtete Krümmung auf.

Wie weiter aus der Figur 4 hervorgeht, bilden die beiden Rohrenden 22, 23 wie bei dem Ausführungsbeispiel der Figuren 1 - 3 eine ringförmige, allerdings hier konisch verlaufende Dichtkammer 26. Diese wird gebildet durch jeweils radiale Wandungen 27, 28 und äußere bzw. innere, konisch verlaufende Wandungen 29, 30 des ersten bzw. zweiten Rohrendes. Dabei verläuft die Wandung 29 von ihrem freien Ende aus betrachtet konisch verjüngend, während die von ihr parallel beabstandete Wandung 30 von deren freiem Ende aus betrachtet konisch verbreiternd verläuft.

Innerhalb der Dichtkammer 26 ist ein Dichtring 31 angeordnet, der aus zwei durch eine Übergangswelle 32 verbundenen Wellenbergen 33 eines Metallbalgabschnittes besteht. Dabei ist die Außenkontur des Dichtringes 31 dem konischen Verlauf der Dichtkammer 26 angepaßt, d. h. sie verläuft ebenfalls konisch. Im Unterschied zu den Ausführungsbeispielen der Figuren 1 - 3 sind hier allerdings nicht nur die Wellenberge 33 durch einen inkompressiblen und flexiblen Feststoff 34 - beispielsweise ein Elastomer-ausgefüllt, sondern auch der von der Übungswelle 32 und von sich gegenüberstehenden Flanken 37 der Wellenberge 33 begrenzte Raum. Dabei kann dieser Raum bis auf die Höhe der benachbarten Wellenberge 33 mit dem Feststoff aufgefüllt werden.

Der Dichtring ist innerhalb der Dichtkammer 26 so angeordnet, daß die Übergangswelle 32 und der Feststoff 34 innerhalb der Wellenberge 33 an der konisch verlaufenden Wandung 30 des zweiten Rohres 23 anliegen, so daß die Wellenberge 33 nach radial außen zeigen. Die Außenseite der Wellenberge 33 sind abgeflacht, wodurch sie sich in einem gleichmäßigen Abstand von der Wandung 29 befinden. Die beiden Außenflanken 35, 36 des Dichtrings 31 laufen geradlinig radial auf die konisch verlaufende Wandung 30 des zweiten Rohres 23 zu und enden an dieser.

Die Dichtwirkung wird auch bei diesem Ausführungsbeispiel dadurch bewirkt, daß die beiden Rohrenden 22, 23 axial aufeinander zu bewegt werden, dabei der Dichtring 31 im wesentlichen axial komprimiert wird, der Feststoff 34 dann im wesentlichen radial ausweicht, und die Wellenberge 33 ausformt, wodurch es zu einer Metall auf Metall-Dichtung zwischen den Wellenbergen 33 und der Wandung 29 kommt. Desweiteren befinden sich anschließend auch die Wellenflanken 35, 36 und die Übergangswelle 32 infolge der Pressung in dichtender Anlage an den ihnen jeweils zugeordneten Wandungen.

Um eine ausreichend große Pressung zu erzielen, ist es notwendig, daß sich vor der Montage das Ende des Rohres 22 und die radiale Wandung 28 des Rohres 23 in genügend großem axialen Abstand voneinander befinden, wie es in der Figur 4 dargestellt ist.

## Patentansprüche

1. Abdichtung zwischen zueinander koaxialen axialsymmetrischen Querschnitten von Bauteilen (1, 2, 22, 23), insbesondere mit ihren Enden aufeinander zu gerichteten Leitungselementen, wobei die Bauteile (1, 2, 22, 23) gemeinsam eine ringförmige Dichtkammer (5, 26) aus Metall mit radial und axial voneinander beabstandeten Wandungen (6, 7, 8, 9, 27, 28, 29, 30) bilden und wobei zur Abdichtung innerhalb der Dichtkammer (5, 26) ein an den Wandungen (6, 7, 8, 9, 27, 28, 29, 30) anliegender Dichtring (10, 31) vorgesehen ist,
dadurch gekennzeichnet,
daß der Dichtring (10, 31) aus einem Metallbalgabschnitt (10, 31) mit wenigstens zwei Wellenbergen (12, 33) oder Wellentälern sowie einer deren einander gegenüberstehenden Flanken miteinander verbindenden Übergangswelle (11, 32) besteht, daß die Wellenberge (12, 33) bzw. Wellentäler mit einem inkompressiblen, flexiblen Feststoff (13, 34) vollständig ausgefüllt sind, und daß die Wellen (11, 12, 32, 33) durch axiale Kompression und daraus resultierende axiale und radiale Verformung des Dichtringes (10, 31) in dichtende Anlage zumindest an die ihnen jeweils zugeordneten, radial voneinander beabstandete Wandungen (8, 9, 29, 30) der Dichtkammer (5, 26) gebracht sind.

2. Abdichtung gemäß Anspruch 1,
dadurch gekennzeichnet,
daß der durch die gegenüberstehenden Flanken (14, 37) und die Übergangswelle (11) begrenzte Raum ebenfalls mit dem inkompressiblen, flexiblen Feststoff (13, 34) vollständig ausgefüllt ist.

3. Abdichtung gemäß Anspruch 1 oder 2,
dadurch gekennzeichnet,
daß die Wellenberge (12, 33) bzw. Wellentäler durch die axiale Kompression von einem teilausgeformten Zustand in einen endgültig ausgeformten Zustand gebracht sind.

4. Abdichtung gemäß Anspruch 3,
dadurch gekennzeichnet,
daß sich die Übergangswelle (11, 32) sowie die Wellenberge (12, 33) bzw. Wellentäler bei ihrem endgültig ausgeformten Zustand in im wesentlichen linienförmiger Anlage an den ihnen zugeordneten Wandungen (9, 8, 29, 30) der Dichtkammer befinden.

5. Abdichtung gemäß einem der Ansprüche 1 bis 4,
dadurch gekennzeichnet,
daß der Abstand der die Übergangswelle (11, 32) begrenzenden Balgflanken (14, 37) geringer als der die Wellenberge (12, 33) bzw. Wellentäler begrenzenden Flanken (14, 15 und 14, 16 und 37, 35 und 37, 36) ist.

6. Abdichtung gemäß einem oder mehreren der Ansprüche 1 bis 5,
dadurch gekennzeichnet,
daß die den Metallbalgabschnitt (10, 31) begrenzenden Außenflanken (15, 16, 35, 36) im wesentlichen geradlinig radial auf die ihnen in Radialrichtung benachbarte Wandung (9, 30) der Dichtkammer (5) zulaufend und an dieser endend ausgebildet sind.

7. Abdichtung gemäß einem oder mehreren der Ansprüche 1 bis 6,
dadurch gekennzeichnet,
daß der Metallbalgabschnitt (10, 31) aus einem temperatur- und korrosionsbeständigen Metall besteht.

8. Abdichtung gemäß Anspruch 7,
dadurch gekennzeichnet,
daß der Metallbalgabschnitt (10, 31) aus Edelstahl besteht.

9. Abdichtung gemäß einem oder mehreren der vorhergehenden Ansprüche,
dadurch gekennzeichnet,
daß der inkompressible Feststoff (13, 34) ein temperatur- und korrosions-beständiger Elastomer ist.

10. Abdichtung gemäß einem oder mehreren der Ansprüche 1 bis 9,
dadurch gekennzeichnet,
daß bei Verbindung zweier einen Strömungsquerschnitt für ein Medium aufweisender Bauteile (1, 2), insbesondere Rohrleitungen, die Dichtkammer (5) gebildet ist durch eine endständige äußere, achsparallele Wandung (8) des ersten Bauteils (1) und eine von ihr radial beabstandete innere, ebenfalls achsparallele Wandung (9) des zweiten Bauteils (2) sowie sich mit axialem Abstand von den jeweiligen freien Enden der achsparallelen Wandungen an diese anschließende, nach radial innen bzw. außen gerichtete Wandungen (6, 7).

11. Abdichtung gemäß einem oder mehreren der Ansprüche 1 bis 9,
dadurch gekennzeichnet,
daß bei Verbindung zweier einen Strömungsquerschnitt für ein Medium aufweisender Bauteile (22, 23), insbesondere Rohrleitungen, die Dichtkammer (26) gebildet ist durch eine endständige äußere, von deren freiem Ende aus konisch verjüngend verlaufende erste Wandung (29) des ersten Bauteils (22) und eine innere, von ihr radial beabstandete und von deren freiem Ende aus konisch verbreiternd verlaufende, zur ersten im wesentlichen parallele zweite Wandung (30) des zweiten Bauteils (23) sowie sich mit axialem Abstand von den jeweiligen freien Enden der konisch verlaufenden Wandungen an diese anschließende, nach radial innen bzw. außen gerichtete Wandungen (27, 28).

12. Abdichtung gemäß Anspruch 10,
dadurch gekennzeichnet,
daß der Außendurchmesser der nach radial außen gerichteten Wandung (7) des zweiten Bauteils (2) kleiner ist als der Innendurchmesser der achsparallelen Wandung (8) des ersten Bauteils (1).

13. Abdichtung gemäß einem der Ansprüche 10, 11 oder 12,
dadurch gekennzeichnet,
daß die nach radial außen gerichtete Wandung (7, 28) des zweiten Bauteils (2, 23) von dem freien Ende der achsparallelen oder konisch verlaufenden Wandung (8, 29) des ersten Bauteils (1, 22) axial beabstandet ist.

14. Abdichtung gemäß einem der Ansprüche 10 bis 13,
dadurch gekennzeichnet,
daß die innere achsparallele oder konisch verlaufende Wandung (9, 30) des zweiten Bauteils (2, 23) endständig in einen seinem Außendurchmesser entsprechenden Innenquerschnitt (3, 24) des ersten Bauteils (1, 22) eintaucht, wobei sich dieser Innenquerschnitt axial an die Dichtkammer (5, 26) anschließt.

15. Abdichtung gemäß Anspruch 14,
dadurch gekennzeichnet,
daß die Übergangswelle (11, 32) an der achsparallelen oder konisch verlaufenden Wandung (9, 30) des eintauchenden Bauteils (2, 23) anliegt.

16. Abdichtung gemäß einem der Ansprüche 1 bis 15,
dadurch gekennzeichnet,
daß die Bauteile (1, 2, 22, 23) durch in Richtung der axialen Kompression der Dichtung (10, 31) verlaufende Spannmittel (17, 18, 19) miteinander verspannt sind.

17. Abdichtung gemäß Anspruch 14,
dadurch gekennzeichnet,
daß die beiden Bauteile (1, 2, 22, 23) durch deren radiale Wandungen (6, 7, 27, 28) hintergreifende Flansche (17, 18) und diese über Bohrungen (20, 21) durchgreifende Spannschrauben (19) verspannt sind.
